# EUROPEAN PATENT APPLICATION

(11) **EP 3 366 392 A1**
(43) Date of publication of application: **29.08.2018**
(21) Application number: 17157618.4
(22) Date of filing: 23.02.2017
(51) Int. Cl.: B22F 3/105, G06F 17/50

(54) **BUILD PLATFORM FOR ADDITIVE MANUFACTURING ADAPTED FOR HEAT TREATMENT PROCESS**

(71) Applicant: Siemens Aktiengesellschaft, 80333 München (DE)
(72) Inventor: Lebed, Yaroslav, 13629 Berlin (DE)

(57) **Abstract**

A build platform (10, 10a, 10b, 10c) for additive manufacturing, such as for selective laser melting, is presented. The build platform comprises an build surface (BS) and a stabilising frame, wherein the stabilising frame defines inner regions (5) of the build platform in which a platform material is spared and wherein the stabilising frame comprises a support structure (11) for mechanically reinforcing a structure of the build platform from distortions during an additive manufacturing process and during a post-buildup heat treatment.

## Description

The present invention relates to a build platform for additive manufacturing, such as selective laser melting and an according use.

Additive manufacturing techniques comprise e.g. powder bed methods, such as selective laser melting (SLM) or selective laser sintering (SLS) or electron beam melting (EBM).

A method of selective laser melting is described in EP 2 601 006 B1, for example.

Additive manufacturing methods have proven to be useful and advantages in the fabrication of prototypes or complex and filigree components, such as lightweight design or cooling components, e.g. comprising mazelike internal structures. Further, additive manufacture stands out for its short chain of process steps, as a manufacturing step can be carried out directly based on corresponding CAD/CAM and/or construction data.

Powder bed manufacturing methods such as selective laser melting or selective laser sintering are relatively well known methods for fabricating, prototyping or manufacturing parts or components from powder material, for instance. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a wiper that moves, e.g. automatically, over the powder bed and removes excess material. Typical layer thicknesses amount to 20 µm or 40 µm. During the manufacture, said laser beam scans over the surface and melts the powder on selected areas which may be predetermined by a CAD-file according to the geometry of the component to be manufactured.

The mentioned "part" or "component" may be a ceramic or metallic part. Preferably, the component pertains to component of a turbine, such as a gas turbine. Preferably, the component is applied in the hot gas path of a gas turbine.

Currently, SLM process technology uses solid (i.e. non-hollow) metallic build plates or platforms of various thicknesses. Fairly thick plates, e.g. 40 mm to 70 mm in thickness, are known to withstand the bending stresses which originate from the built parts during the solidification of the powder after melting. This keeps the parts in steady accurate position during the build process, not allowing them to deform or distort.

After the parts are printed or manufactured and preferably before the respective parts or component is separated, such as cut off, from the build plate, the part needs to be heat treated, e.g. in a special oven. If the component would be separated prior to a heat treatment, stress generated in the component during the manufacture would likely cause damage, such as rupture to the component and would make it unusable.

If the build plate is much greater or thicker than the thickest part of the built part, and the build plate is made of a solid block, which is usual, then during the heating-up and cooling-down of a heat-treatment process, the build-plate is heats up and cools down much slower than the respective part placed on it. This temperature difference may cause deformation or distortion to parts and to the build plate itself.

The mentioned temperature difference arises - firstly - from different heat capacities of the material of the build platform on one side and the component to be manufactured on the other side, and - secondly - from different thermal expansion coefficients of said materials.

As materials of the build platform and the component usually differ, it is desirable to reduce temperature differences or heat transfer caused by different warming and/or cooling behaviour of the build platform and the component during the additive manufacture as well as e.g. after the manufacture in during the heat treatment. It is apparent, that the problem caused by said different temperatures will become more and more significant as the size of 3D-printers or manufacturing devices and, thus, the size of the components to be manufactured increases, as this increase may in turn increase thermal expansion lengths and differences in the thermal potentials of the involved materials.

It is an object of the present invention to provide means by which heat transfer between the platform and the component can be reduced during and, preferably after the additive manufacture of the component.

The object is achieved by the subject-matters of the independent claims. Advantageous embodiments are subject-matter of the dependent claims.

An aspect of the present invention relates to a build platform or build plate for additive manufacturing, such as for selective laser melting, comprising the build surface. The build surface is preferably an even top surface of said build platform. The build platform further comprises a stabilising frame, wherein the stabilising frame defines inner regions of the build platform in which a platform material is spared. In other words, the build platform is hollow or cavities remain in an inside, i.e. the regions, of the build platform.

The stabilising frame comprises a support structure, e.g. further comprising a plurality of struts or trusses for mechanically reinforcing the support structure of the build platform, e.g. from stress-induced distortions during an additive manufacturing process and/or during a post-buildup heat treatment.

Preferably, the build surface is prevented from being distorted by the reinforcement of the support structure.

As an advantage, the inventive objects can be fulfilled, particularly, the substrate or build platforms for the additive manufacture, particularly selective laser melting methods, can be awarded with sufficient mechanical properties and, at the same time, allow for a compensation of thermal differences during and after the additive manufacture of the respective component to be manufactured on said platform.

A further aspect of the present invention relates to a use of said build platform in an additive manufacturing process, such as a powder bed based process, wherein a laser or energy beam serves for the solidification of a metallic powdery base material, and wherein the component to be manufactured is metallurgically joined to the build surface of the build platform.

In an embodiment, the support structure comprises a plurality of struts or trusses which may define the inner regions.

In an embodiment, the regions are left free of a solid material. In other words, the regions are hollow or contain only gas or a (partial) vacuum. According to this embodiment, the thermal mass or heat capacity of the build platform can be significantly reduced.

In an embodiment, the regions are at least partly filled with inlets having a material with a lower heat capacity as compared to the platform material. This embodiment also serves the purpose of reducing heat capacity of the build platform. In an embodiment said regions are fully filled with the respective inlet material.

In an embodiment, the support structure comprises a supporting field, e.g. a granular or powdery material. Interspaces of said grain or powder particles may then constitute the inner regions. As a consequence, heat capacity of the platform in general may be reduced. At the same time, the feel may serve for a stabilisation reinforcement or support of the build platform.

In an embodiment, the build platform comprises a top board, e.g. comprising the build surface, and a bottom board, and wherein the struts form a lattice disposed between the top board and the bottom board. According to this embodiment, the build platform may be composed of a sandwich-like structure which provides for an expedient and rigid structure.

In an embodiment, the lattice is configured such that the struts connect the top board and the bottom board and wherein inclinations and/or a periodicity of the struts are chosen to withstand, e.g. expected, distortions of the build surface during an additive manufacturing process and/or during a post-buildup heat treatment.

In an embodiment, the component to be manufactured as a component of a turbo machine, such as a component applied in the flow or hot gas path of the gas turbine.

In an embodiment, the stabilising frame is configured such that an amount of 10% to 40% of the platform material is spared as compared to a fully solid build platform of the same size, thereby decreasing heat capacity of the build platform of up to 40%.

In an embodiment, e.g. in use of the build platform, a cooling fluid is passed through at least parts of the regions in order to cool the structure of the build platform during an additive manufacturing process and/or during a post-buildup heat treatment. Thus, the inner regions can on one hand reduce heat capacity of the build platform, and on the other hand further function as cooling channels. According to this embodiment, the inner regions may possibly be dimensioned smaller as compared to the further described embodiments which further increases stability of the build platform.

A further aspect of the present invention relates to a method, or as the case may be, a computer program, computer program product, or computer readable medium comprising executable program instructions which are suitable, to effect a data processing unit and/or an additive manufacturing device to carry out determining a heat capacity of the component to be manufactured on the build surface based on its predetermined geometry, e.g. by means of infinite element simulations.

The method or computer program further comprises adapting a, e.g. specific, heat capacity of the build platform to the determined heat capacity of the component in that a volume and a location of the support structure is determined accordingly, and wherein the required rigidity of the build platform is considered in that the geometry, e.g. inclinations and a periodicity, of the support structure, such as the struts, is determined accordingly, e.g. using thermal mechanical simulation algorithms. Said adapting is preferably carried out such that the build platform and the component to be manufactured have preferably the same or similar heat up and cooling down behaviour, so that none or very little heat is transferred, preferably during a post-buildup heat treatment.

The mentioned required rigidity may pertain to a mechanical strength or durability, as to withstand (expected) distortions during the additive manufacture of the component and/or during a subsequent post-buildup heat treatment, for example.

In an embodiment, the adapting is carried out in that it is accounted for and expected or calculated stress, strain, or distortion, possibly due to different (material specific) thermal expansion coefficients and/or different heat capacities, of or between the build platform and the component to be manufactured, and vice versa.

Advantages relating to the described build platform and/or the described use may as well pertain to the described method/computer program and vice versa.

Further features, expediencies and advantageous refinements become apparent from the following description of the exemplary embodiment in connection with the Figures.
- Figure 1: shows a schematic of a build platform for the additive manufacture of the prior art.
- Figure 2: shows in a schematic side or cross-sectional view, a component (being) manufactured on the platform of Figure 1.
- Figure 3: indicates in a schematic a cross-section of the build platform according to the present invention.
- Figure 4: indicates in a schematic a cross-section of the build platform in an alternative embodiment.
- Figure 5: indicates in a schematic a cross-section of the build platform in another embodiment.
- Figure 6: indicates a schematic cross-section of the build platform in still another embodiment.
- Figure 7: indicates a schematic cross-section of the build platform in still another embodiment.
- Figure 8: shows a schematic flow chart of steps of the method according to present invention.

Like elements, elements of the same kind and identically acting elements may be provided with the same reference numerals in the figures.

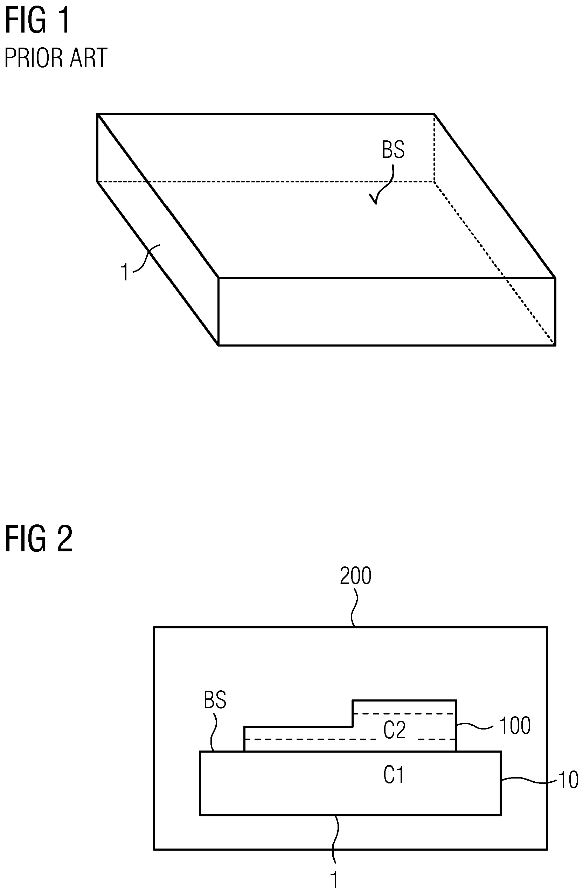

Figure 1 shows a build platform 1. The build platform may be a conventional build platform for the additive manufacture of components, preferably of components fabricated by powder bed based methods, such as selective laser melting or electron beam melting. Accordingly, the build platform 1 may be made of steel or comparable rigid and durable materials. The build platform 1 further comprises a cuboid-like shape in order to provide for a certain mechanical stability, particularly for stabilising or supporting component to be manufactured on e.g. a build surface BS of the build platform 1. It is particularly desired, that the build platform counteracts a distortion of the component during or after its manufacture (cf. Figure 2). Such distortion is particularly likely to occur due to thermal, mechanical or thermal mechanical stresses, such as bending stresses, which arise as a consequence of heat transfer and/or fairly large temperature gradients (1000 K per second or more) in the additive manufacture.

Figure 2 shows the build platform of Figure 1 in a side or sectional view, wherein on top of the build platform, particularly on the build surface BS, the component 100 is or is being manufactured. Preferably, the component 100 is manufactured by selective laser melting or (selective) electron beam melting, wherein high irradiation energies are applied to a powder bed, in order to solidify and layerwise provide for the final component. Said layers are indicated in Figure 2 by the dashed horizontal lines. Said component 100 may be actually manufactured in an additive manufacturing device 200, such as "3D-printer". The material of the component 100 may be similar material as compared to the one of the build platform 1. However, the materials of the component in the build platform are usually different. In case of the additive manufacture of turbine components, particularly components construed for high thermal loads during an application of the respective turbine, the components have to be made of a (nickel or cobalt-based) superalloy or precipitation hardened alloy. These materials particularly award the component with extremely high heat and/or creep resistivity.

It is indicated in Figure 2, that the build platform comprises a first heat capacity c1, whereas the component comprises a second heat capacity c2 which is preferably different from the first heat capacity c1.

As is not shown in the images, the readily manufactured component is usually post-heat-treated along with or in a state bonded to its build plate in a specific oven. Said heat treatment may particularly heal or relieve the stresses generated during the buildup or manufacture, such as bending stresses. Consequently, it is achieved, that the build platform may be separated at all from the component without its destruction or damage.

If the build plate or platform 1 is e.g. much thicker or more bulky than the component 100, it then heated up and cooled down much slower than the component itself which causes deformation and/or distortion of the component, the build platform or the respective joint in-between. In this case, the heat capacity or thermal mass c1 is e.g. much higher than the heat capacity c2 of the component 100.

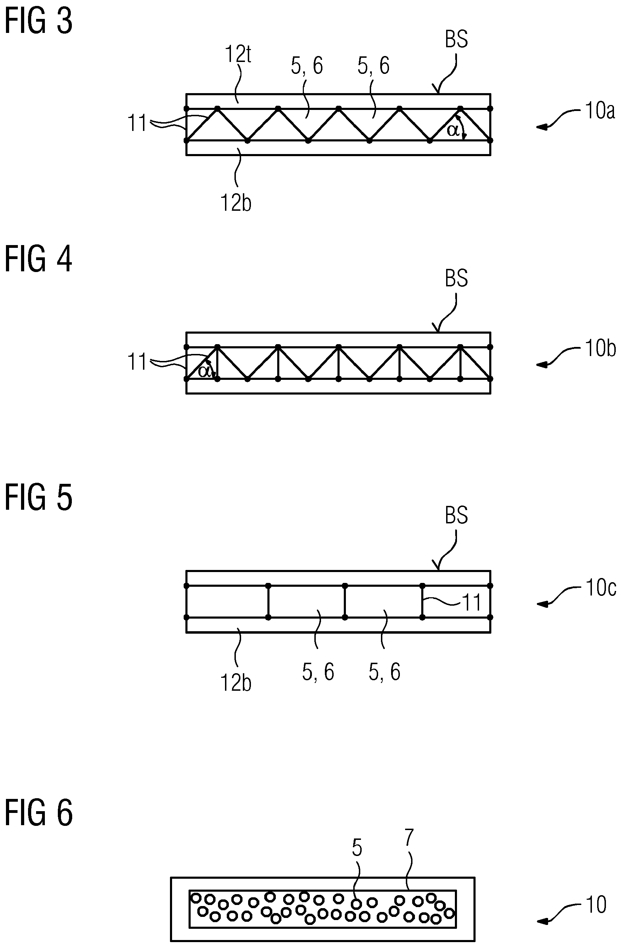

Figure 3 shows an exemplary embodiment of a build platform 10a according to the present invention. The build platform comprises a top board 12t and a bottom board 12b. The build platform 10a may further comprise side walls or boards, e.g. at lateral sides, which are not explicitly indicated here. The build platform 10 a further comprises a support structure 11 and/or a stabilising frame (not explicitly indicated). The support structure 11 comprises or is constituted by a plurality of struts 11 being arranged between the top board 12t and the bottom board 12b, thus connecting said boards. The struts 11 may be arranged obliquely or inclined with respect to surface normal of the boards, as indicated in Figure 3. An angle α is shown on the right in the image indicating the inclination of one of the struts 11. α may amount to between 30 and 60°, for example, such as 45°.

Said boards (12t, 12b) as well as the mentioned struts 11 provide for the necessary rigidity of the build platform in order to be able to mechanical support or reinforce the component against distortions during the buildup. To this effect, the struts 11 as well as said boards are preferably provided with the necessary or required thickness in geometry (see Figures 4 and 5 below).

Interspaces or inner regions 5 are defined by the struts 11 of the support structure, or vice versa.

The inner regions 5, recesses or cavities of the presented build platform 10, preferably award said platform with a lower heat capacity such that a heat transfer from the build platform to the component, or vice versa, during the additive manufacture as well as during a post-buildup heat treatment, can be minimised. At the same time, the required stability can be maintained. To this effect, the build platform 10a (also compare build platforms 10b and 10c in Figures 4 and 5) may particularly be tailored to the required demand in terms of its therm-mechanical properties).

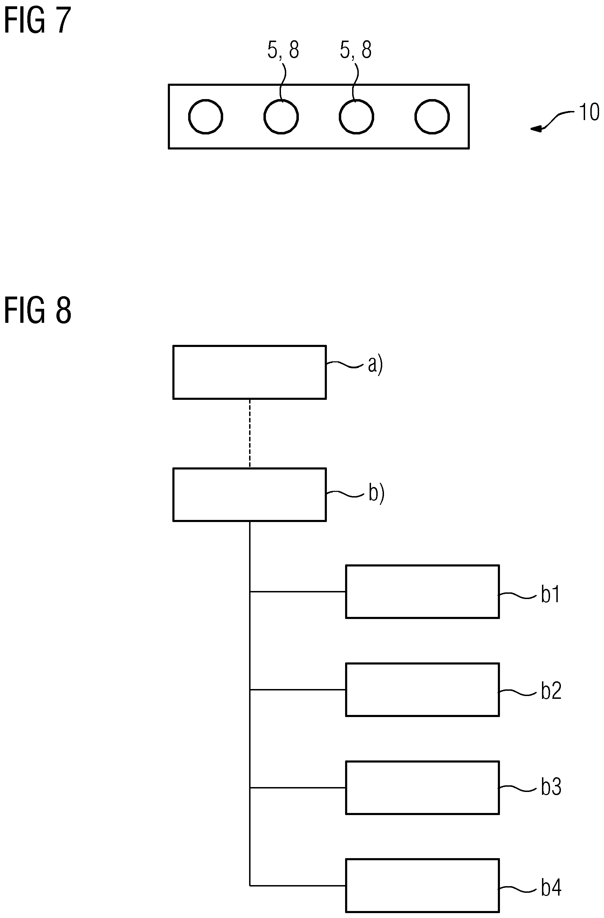

Figure 4 shows an exemplary embodiment of a build platform 10b according to the present invention. Said build platform may particularly allow for exploiting the same inventive advantages as described by means of the platform 10a above. In contrast to the indication of Figure 2, additional vertical struts 11 are provided which additionally support the build platform 10b, particularly the top board 12t and the bottom board 12b, viz. in a way, that the build surface BS is not distorted or deformed. Compared to the build platform 10a of Figure 3, the supporting or reinforcing effect of the struts may still be increased, where as a heat capacity is also increased. Thus, an optimum has to be found, e.g. for an adapted heat capacity at a maximum mechanical supporting effect. Alternatively, heat capacity may be minimised at a given operating mechanical stability (cf. in this regard the method as described by means of Figure 8).

Figure 5 shows an exemplary embodiment of a build platform 10c according to the present invention. In contrast to the indication of Figure 2, for example, the build platform 10c only comprises vertical struts 11 between the top board 12t and the bottom board 12b. Thus, the inclined or obliquely arranged struts 11 are omitted. This will have the effect of a decreased heat capacity and, as well, a decreased mechanical stability of the platform.

Figure 6 shows an embodiment of the presented build platform in a schematic sectional view, wherein an inner region 5 this is partially filled with the supporting fill of, e.g. a granular material or a powder. Said fill may as well surf for the purpose of providing mechanical reinforcement to the build platform.

Figure 7 shows a schematic sectional view of still an alternative embodiment of the presented build platform, wherein the inner regions are formed of or constitute bores, e.g. drilling boss. To this effect, the struts may be of a nonuniform shape or longitudinal extension. According to this embodiment, of cooling fluid may be guided through the inner regions of bores for cooling the build platform, e.g. during a post-buildup heat treatment when the build platform comprises a larger heat capacity as compared to the component to be manufactured thereon. In this way, heat capacities of component build platform may be adapted, and, accordingly, heat transfer may be minimised.

Figure 8 indicates method steps such as steps performed by a computer program, of the method of designing or adapting the build platform according to the present invention. The method is intended for designing or dimensioning the build platform, particularly the geometry of the support structure as mentioned above.

The method comprises determining a heat capacity of the component 100 to be manufactured on the build surface BS based on its predefined geometry (cf. Reference a)).

The method further comprises adapting a heat capacity of the build platform to the determined heat capacity of the component 100 (cf. Reference b)).

This is particularly performed in that a volume and a location of the regions 5 and/or the struts of the support structure is chosen accordingly (cf. Reference b1)), wherein a required rigidity of the build platform is considered in that a geometry of the support structure or the struts 11 is determined or chosen accordingly, e.g. using thermal mechanical simulation algorithms (cf. reference b2)).

Said step of the adapting may further be carried out in that it is accounted for an expected, calculated or simulated stress between the build platform and the component 100 to be manufactured during the additive manufacture of the component 100 (cf. Reference b3)) and during a post-buildup heat treatment (cf. Reference b4)).

Thus, depending on the extensions, mass or heat capacity of the component to be manufactured, a build platform of a comparable heat capacity may be chosen.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Build platform (10, 10a, 10b, 10c) for additive manufacturing, such as for selective laser melting, comprising an build surface (BS) and a stabilising frame, wherein the stabilising frame defines inner regions (5) of the build platform in which a platform material is spared, and wherein the stabilising frame comprises a support structure (11) for mechanically reinforcing a structure of the build platform from distortions during an additive manufacturing process and during a post-buildup heat treatment.

2. Build platform (10, 10a, 10b, 10c) according to claim 1, wherein the support structure comprises a plurality of struts (11) defining the regions (5), and wherein the regions (5) are left free of a solid material.

3. Build platform (10, 10a, 10b, 10c) according to claim 1 or 2, wherein the regions (5) are at least partly filled with inlets (6) having a material with a lower heat capacity as compared to the platform material.

4. Build platform (10, 10a, 10b, 10c) according to one of the previous claims, wherein the build platform comprises a top board (12t) and a bottom board (12b), and wherein the struts (11) form a lattice disposed between the top board (12t) and the bottom board (12b).

5. Build platform (10, 10a, 10b, 10c) according to claim 4, wherein the lattice is configured such that the struts (11) connect the top board (12t) and the bottom board (12b) and wherein, inclinations (α) and a periodicity of the struts (11) are chosen to withstand distortions of the build surface (BS) during an additive manufacturing process and during a post-buildup heat treatment.

6. Build platform (10, 10a, 10b, 10c) according to claim 1, wherein the support structure comprises a supporting fill (7), e.g. of a granular material.

7. Build platform (10, 10a, 10b, 10c) according to one of the previous claims, wherein the stabilising frame is configured such that an amount of 10 % to 40 % of the platform material is spared as compared to a fully solid build platform (1) of the same size, thereby decreasing heat capacity of the build platform of up to 40 %.

8. Use of a build platform according to one of the previous claims in an additive manufacturing process, such as a powder bed based process, wherein a laser or energy beam serves for the solidification of a metallic powdery base material, and wherein a component (100) to be manufactured is metallurgically joined to the build surface (BS) of the build platform (10, 10a, 10b, 10c).

9. Use according to claim 7, wherein a cooling fluid is passed through at least parts of the regions in order to cool the structure of the build platform during an additive manufacturing process and during a post-buildup heat treatment.

10. Computer program comprising executable program instructions which are suitable, to effect a data processing unit to carry out the following steps:
- determining a heat capacity of the component (100) to be manufactured on the build surface (BS) based on its predefined geometry,
- adapting a heat capacity of the build platform to the determined heat capacity of the component (100), in that a volume and a location of support structure is determined accordingly, and wherein a required rigidity of the build platform is considered in that a geometry of the support structure, such as the struts (11), is determined accordingly, e.g. using thermo-mechanical simulation algorithms.
